# EUROPEAN PATENT APPLICATION

(11) **EP 4 391 289 A1**
(43) Date of publication of application: **26.06.2024**
(21) Application number: 23211477.7
(22) Date of filing: 22.11.2023
(51) Int. Cl.: H02J 7/00, H01G 11/08, H02J 7/34

(54) **ULTRACAPACITOR MODULE WITH ACTIVE CAPACITOR CELL VOLTAGE CONTROL**

(30) Priority: 23.11.2022 US 202263427499 P; 27.04.2023 US 202363462334 P; 21.11.2023 US 202318515900
(71) Applicant: Aptiv Technologies AG, 8200 Schaffhausen (CH)
(72) Inventor: DEUTSCH, Robert, Shelby Township, MI 48315 (US); MOORE, Stephen, Fishers, IN 46037 (US)
(74) Representative: Bardehle Pagenberg Partnerschaft mbB Patentanwälte Rechtsanwälte

(57) **Abstract**

An ultracapacitor module (100) includes an ultracapacitor cell stack (202) containing ultracapacitor cells (204) connected in series and a bidirectional boost/buck DC/DC converter (208). The cell stack (202) and the converter (208) are configured to be connected in series with a voltage bus (218) of a vehicle. The ultracapacitor module (100) includes voltage sensors (702) configured to determine a voltage value of each ultracapacitor cell (204). The ultracapacitor module (100) includes electronically controlled switches (706) connected in series with a bleed resistor (704). The electronically controlled switches (706) and bleed resistor (704) are connected in parallel with each of the ultracapacitor cells (204). The ultracapacitor module (100) includes an electronic controller (206) that communicates with the converter (208), the voltage sensors (702), and the switches (706). The electronic controller (206) is configured to determine the voltage of each ultracapacitor cell (204) via the voltage sensors (702) and operate the switches (706) to selectively discharge at least one of the ultracapacitor cells (204) to bring the voltage of the discharged ultracapacitor cell (204) closer to one of the other ultracapacitor cells (204).

## Description

This disclosure is directed to an ultracapacitor module with active capacitor cell voltage control.

Because of their low voltage, e.g., 2.7 to 3.0 volts, ultracapacitor cells are typically used in series strings for higher voltage applications. The typical automotive system employs six ultracapacitor cells (for 12 volt systems) or twenty ultracapacitor cells (for 48 volt systems) that are connected in series. In high-voltage uninterruptible power supply (UPS) or grid energy systems, hundreds of ultracapacitor cells may be connected in series.

The fundamental ultracapacitor cell has a high self-discharge leakage current. Individual ultracapacitor cells within a series string, even with tight small cell-to-cell tolerances, start to form voltage differentials between one another over time. The ultracapacitor cell with the highest self-discharge characteristic will progressively drop to a lower voltage than its neighbors, eventually causing voltage imbalances within the series string of ultracapacitor cells.

Typically, this ultracapacitor cell self-discharge phenomenon is dealt with using "passive balancing," in which a resistor ladder is connected across all of the ultracapacitor cells. Typically, these resistors consume an order of magnitude more current than the capacitor's inherent internal leakage current. Therefore, the resistor ladder's cell-to-cell leakage current overwhelms any individual capacitor's internal leakage current.

While this passive balancing has the benefit of being quite simple with no need for electronic controls, it also has the downside of continually consuming energy. When the capacitors are idle, the resistors continue to consume current from the ultracapacitor cells until the ultracapacitor cells are depleted. This requires the ultracapacitor module to be recharged after any time spent at idle. Even a small amount of time at idle will result in some energy being lost, which will need to be replenished before the next time the ultracapacitor cells are used.

Depleting the ultracapacitor cells during idle has benefits for ultracapacitor cell lifetime. Ultracapacitor cell aging is a function of terminal voltage and temperature. Ultracapacitor cell lifetime can be increased for any given temperature by reducing terminal voltage. When the capacitors are idle, the resistor ladder bleeds off energy, thereby lowering the terminal voltage of the ultracapacitor cells and preserving ultracapacitor cell lifetime.

In some aspects, the techniques described herein relate to an ultracapacitor module, including: an ultracapacitor cell stack containing two or more ultracapacitor cells connected in a series circuit; a bidirectional boost/buck DC/DC converter, wherein the ultracapacitor cell stack and the DC/DC converter are configured to be connected in series with a voltage supply bus of a vehicle; two or more voltage sensors configured to determine a voltage value of each of the two or more ultracapacitor cells in the series circuit; two or more electronically controlled switches each connected in series with a bleed resistor, wherein one of the electronically controlled switches and bleed resistors are connected in parallel with each of the ultracapacitor cells; and an electronic controller in electrical communication with the DC/DC converter, the voltage sensors, and the electronically controlled switches, wherein the electronic controller is configured to: determine the voltage of each of the two or more ultracapacitor cells via the voltage sensors, and operate the electronically controlled switches to selectively discharge at least one of the two or more ultracapacitor cells to bring the voltage of the discharged ultracapacitor cell closer to one of the other two or more ultracapacitor cells.

In some aspects, the techniques described herein relate to a method of operating an ultracapacitor module connected to a voltage supply bus of a vehicle, the ultracapacitor module having an ultracapacitor cell stack containing two or more ultracapacitor cells connected in a series circuit, a bidirectional boost/buck DC/DC converter, wherein the ultracapacitor cell stack and the DC/DC converter are configured to be connected in series with a voltage supply bus of a vehicle, two or more voltage sensors configured to determine a voltage value of each of the ultracapacitor cells, two or more electronically controlled switches each connected in series with a bleed resistor, wherein one of the electronically controlled switches and bleed resistors are connected in parallel with each of the two or more ultracapacitor cells, and an electronic controller in electrical communication with the DC/DC converter, the voltage sensors, and the electronically controlled switches, the method including: determining the voltage of each of the two or more ultracapacitor cells via the voltage sensors, and operating the switches to selectively discharge at least one of the two or more ultracapacitor cells to bring the voltage of the discharged ultracapacitor cell closer to one of the other two or more ultracapacitor cells.

In some aspects, the techniques described herein relate to an ultracapacitor module, including: an ultracapacitor cell stack containing one or more ultracapacitor cells; a bidirectional boost/buck DC/DC converter, wherein the ultracapacitor cell stack and the DC/DC converter are configured to be connected in series with a voltage supply bus of a vehicle; and an electronic controller in electrical communication with the DC/DC converter and a vehicle communication bus configured to provide information regarding load status information for electrical loads on the voltage supply bus, wherein the electronic controller is configured to raise or lower a programmable float voltage Vf of the ultracapacitor cell stack based on active and/or inactive load status information received from the vehicle communication bus.

The ultracapacitor module will now be described, by way of example with reference to the accompanying drawings, in which:
FIG. 1 shows an isometric view of an ultracapacitor module according to some embodiments.
FIG. 2 shows a schematic diagram of system components of an ultracapacitor module according to some embodiments.
FIG. 3 shows a diagram of a cell stack voltage and a float voltage of an ultracapacitor module according to some embodiments.
FIG. 4 shows a histogram of self-discharge in ultracapacitor cells according to some embodiments.
FIG. 5 shows a graph of ultracapacitor cell voltage divergence of ten ultracapacitor cells over 70 hours of idle time according to some embodiments.
FIG. 6 shows a graph of ultracapacitor cell life vs. terminal voltage at various temperatures according to some embodiments.
FIG. 7 shows a schematic circuit diagram of an active capacitor load balancing circuit according to some embodiments.

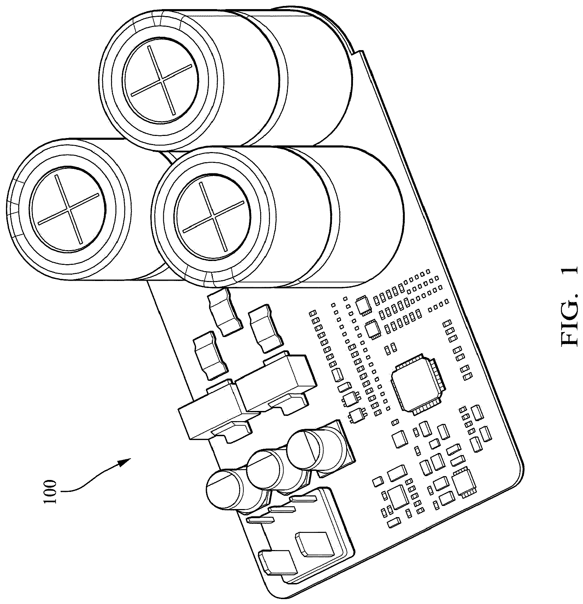

The present disclosure describes an ultracapacitor module shown in FIG. 1, hereafter referred to as the UCM 100. The UCM 100 addresses many of the deficiencies of the prior art described above. The UCM 100 in this example protects the voltage supply bus in a vehicle, e.g., an internal combustion engine vehicle, a hybrid electric vehicle, or an electric vehicle, from voltage sags or flyback voltage spikes caused by the switching of high current draw loads on and off on the voltage supply bus, e.g., electric antilock brakes, electric power steering, etc., thereby providing protection from voltage sags and flyback voltage spikes having a duration of 100 microseconds to 100 milliseconds to other electronic modules on the voltage supply bus. The UCM 100 may also or alternatively be configured provide emergency back-up power to satisfy safety critical systems, such as brake-by-wire or power door locks, for 1 to 2 seconds, in case of a loss of the primary electrical power supply in order to meet the necessary automotive safety integrity level (ASIL) of these systems, such as defined by the International Standards Organization (ISO) 26262-1:2001 Road Vehicle Functions Safety Standard.

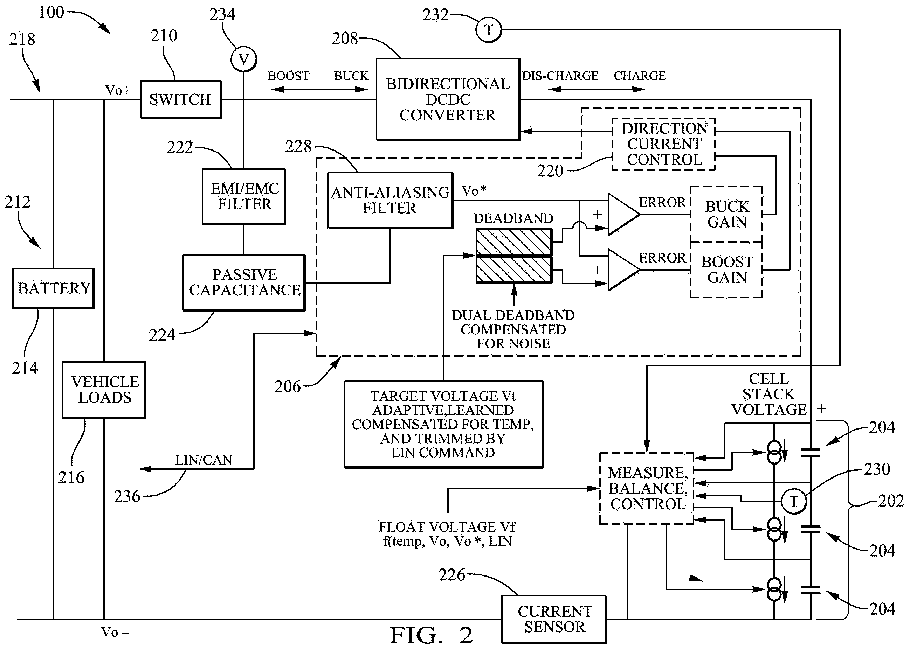

As shown in FIG. 2, the UCM 100 includes an ultracapacitor cell stack 202 that has several ultracapacitor cells 204. As used herein, an ultracapacitor cell is a capacitive storage device having a capacitance of at least 100 farads. In this example three 325 farad, 2.7 volt ultracapacitor cells 204 are connected in series, thereby providing the ultracapacitor cell stack 202 with an equivalent capacitance of 108 farads and a working range of 5.0 to 8.4 volts. The configuration of the ultracapacitor cell stack 202 could be 3S1P (3 cells in series and 1 parallel string with 108F and 8.4V max) as in this example, or it could be 3S2P (3 cells in series and 2 parallel strings with 217F and 8.4V max), or in general xSyP. The ultracapacitor cell stack 202 is configured to operate at currents up to 200 amperes. The UCM 100 also includes an electronic controller 206 which controls the voltage of each ultracapacitor cell 204 and thereby controls the voltage of the ultracapacitor cell stack 202. The electronic controller 206 has one or more processors and one or more memory devices. The processors may be microprocessors, application specific integrated circuits (ASIC), or built from discrete logic and timing circuits (not shown). Software instructions that program the processors may be stored in a nonvolatile memory device (not shown). The memory device may be contained within the microprocessor or ASIC. Alternatively, the memory device may be a separate device. Non-limiting examples of the types of memory device that may be used include electrically erasable programmable read only memory (EEPROM), masked read only memory (ROM), and flash memory devices.

The UCM 100 further includes a bidirectional boost/buck DC/DC converter 208 that is capable of conducting at least the same current as the ultracapacitor cell stack 202 as the current flows in to or out of the ultracapacitor cell stack 202. Under the control of the electronic controller 206, the DC/DC converter 208 quickly switches between boost and buck modes. This time period for this transition is preferably in the order of 25 to 100 microseconds. Other electronic modules connected to the voltage supply bus may also include capacitors that are appropriately sized to provide electrical power to these electronic modules during voltage transients on the voltage supply bus while the DC/DC converter 208 is transitioning between boost and buck modes. The electronic controller 206 also controls the direction and the magnitude of electrical power flowing through the DC/DC converter 208. The electronic controller 206 additionally monitors the voltage of the voltage supply bus 218 and adaptively determines its nominal value, its rate of change, and, optionally, its frequency spectrum content. The UCM 100 may optionally include a switch 210 to protect against reverse polarity voltage.

FIG. 2 is a block diagram of vehicle electrical system 212 utilizing ultracapacitor module 100 according to some embodiments. In some embodiments, vehicle electrical system 212 includes one or more power sources 214 (e.g., battery, alternator, etc.), one or more vehicle loads 216, a voltage supply bus 218, and the UCM 100. UCM 100 is connected to the voltage supply bus 218 and is configured to selectively provide power to the voltage supply bus 218 (boost mode) or receive power from the voltage supply bus 218 (buck mode). The voltage on the voltage supply bus 218 is designated as operating voltage Vo and may also be referred to as bus voltage.

In some embodiments, UCM 100 includes a plurality of ultracapacitor cells 204 connected in series with one another to form an ultracapacitor cell stack 202, a DC/DC converter 208, a switch 210 and an electronic controller 206. As shown in FIG. 2, DC/DC converter 208 is connected in series between the plurality of ultracapacitor cells 204 and the voltage supply bus 218. In general, UCM 100 operates by monitoring the operating voltage Vo on the voltage supply bus 218 and selectively operating DC/DC converter 208 to supply power to the voltage supply bus 218 when the operating voltage Vo falls below a threshold or target bus voltage value Vt (boost mode) and to receive power from the voltage supply bus 218 when the operating voltage Vo is above the threshold or target bus voltage value Vt (buck mode). To prevent the DC/DC converter 208 from oscillating between boost and buck modes, a dead band is set around the target bus voltage value Vt. The DC/DC converter 208 does not operate in boost mode until the operating voltage Vo is at or below a lower dead band limit that is below the target bus voltage value Vt and the DC/DC converter 208 will continue to operate in boost mode until the operating voltage Vo is raised/boosted back to the target bus voltage value Vt (or within an acceptable tolerance of the target bus voltage value Vt). Similarly, the DC/DC converter 208 does not operate in buck mode until the operating voltage Vo is at or above an upper dead band limit that is above the target bus voltage value Vt and the DC/DC converter 208 will continue to operate in buck mode until the operating voltage Vo is lowered/bucked back to the target bus voltage value Vt (or within an acceptable tolerance of the target bus voltage value Vt). The dead band is typically selected to accommodate variations in the operating voltage Vo, which may be affected by wire and connector resistance, ambient temperature, vehicle-to-vehicle variances, component tolerances, system life stage, and electrical noise. In some embodiments, the UCM 100 accounts for variations in the operating voltage Vo that allows for utilization of a smaller dead band range, as described in more detail below. In particular, in some embodiments the UCM 100 uses a table of voltage values (initial voltage value Vi) and corresponding temperatures. At vehicle start-up, a temperature of the UCM 100 is measured and the initial voltage value Vi for the corresponding temperature is selected from the table and is used to determine the target bus voltage value Vt. The voltage values in the table may be selectively updated over time in order to account for variances that are measured in the system. In this way, the UCM 100 is able to utilize learned voltage values to control the target bus voltage value Vt and thereby minimize the dead band range that may otherwise be required. In some embodiments, the target bus voltage value Vt may also be adjusted during operation of the UCM 100 based on additional inputs received from the vehicle regarding actual or expected loads, events, etc.

As shown in FIG. 2, electronic controller 206 is configured to monitor the operation of DC/DC converter 208 and includes a direction and current control block 220 to provide commands for controlling the operation of DC/DC converter 208. Monitoring may include utilizing one or more sensors 234 to monitor the operating voltage Vo of the voltage supply bus 218. Monitoring may further include monitoring ultracapacitor cell stack temperature in order to map bus voltages to temperature. Electronic controller 206 provides as a command the direction of power flow (buck/boost) and a target voltage/current for the DC/DC converter 208. As described in more detail below, the electronic controller 206 may adjust the target bus voltage value Vt based on additional inputs received from the vehicle regarding actual or expected loads, events, etc. By controlling the target bus voltage value Vt and controlling the direction of power flow (buck/boost), the dead band range may be significantly narrowed. Electronic controller 206 is also configured to monitor and control the operation of the ultracapacitor cell stack 202, including monitoring the balance, state of health (SOH), state of charge (SOC), diagnostics, safety, temperature, etc. associated with the ultracapacitor cell stack 202.

As shown in FIG.2, UCM 100 may also include an electromagnetic interference/ electromagnetic compliance (EMI/EMC) filter 222 and passive capacitance 224 between the voltage supply bus 218 and the voltage sensing input of the electronic controller 206 which then passes through an anti-aliasing filter 228 within the electronic controller 206. The UCM 100 may also include one or more current sensors 226 to monitor the current flowing to/from the ultracapacitor cells 204, a first temperature sensor 230 to measure the temperature of the ultracapacitor cells 204, a second temperature sensor 232 to measure the temperature of the DC/DC converter 208, and one or more voltage sensors 234 configured to measure the operating voltage Vo of the voltage supply bus 218.

As further shown in FIG. 2, the electronic controller 206 may also include a digital anti-aliasing filter 228 to filter the operating voltage Vo input from the voltage supply bus 218, thereby providing a filtered operating voltage Vo*. The filtered operating voltage Vo* is filtered to remove noise, such as that produced by the switching of the DC/DC converter 208 or other electrical devices connected to the voltage supply bus 218. The electronic controller 206 is also configured to compare the operating voltage Vo to the upper and lower dead band limits and determine a buck gain if the operating voltage Vo is above the upper dead band limit and determine a boost gain if the operating voltage Vo is below the lower dead band limit. The buck/boost gain is sent to the direction and current control block 220 in the controller 206 to provide the commands for controlling the DC/DC converter 208.

As shown in FIG. 2, the buck/boost DC/DC converter 208 is connected in series between the ultracapacitor cell stack 202 in the ultracapacitor module 100 and the voltage supply bus 218 and is operated under the direction of the electronic controller 206. The electronic controller 206 provides the DC/DC converter 208 with the ability to map the voltage of the ultracapacitor cell stack 202 to the operating voltage Vo. Actively controlling a programmable float voltage value Vf is the means of mapping the voltage of the ultracapacitor cell stack 202 to the operating voltage Vo.

The operating voltage Vo has a relatively large variance range due to temperature, operational tolerances of other components, vehicle-to-vehicle variance, ultracapacitor module life stage, and electrical noise on the voltage supply bus 218. Dual dead bands, shown in the electronic controller 206 in FIG. 2 are established to avoid oscillation of the DC/DC converter 208 between boost and buck modes due to small variations of the operating voltage Vo. The dead bands between boost and buck modes are as large as, or larger than, the variances and tolerances described above to avoid undesirable switching between boost and buck modes. With a large dead band, the electronic controller 206 cannot minimize a disturbance on the voltage supply bus 218 because control of the voltage supply bus 218 does not begin until the operating voltage Vo is outside the limits of the dead band. The electronic controller 206 may independently control an upper dead band with an upper dead band limit above the target bus voltage value Vt and a lower dead band with a lower dead band limit below the target bus voltage value Vt. The DC/DC converter 208 does not operate in boost mode until the operating voltage Vo is at or below the lower dead band limit and the DC/DC converter 208 will continue to operate in boost mode until the operating voltage Vo is raised/boosted back to the target bus voltage value Vt (or within an acceptable tolerance of the target bus voltage value Vt). Similarly, the DC/DC converter 208 does not operate in buck mode until the operating voltage Vo is at or above the upper dead band limit and the DC/DC converter 208 will continue to operate in buck mode until the operating voltage Vo is lowered/bucked back to the target bus voltage value Vt (or within an acceptable tolerance of the target bus voltage value Vt).

In some embodiments, the target bus voltage value Vt, the upper dead band limit and the lower dead band limit may be set by an external module over a LIN/CAN communication bus so that the UCM 100 operates in a primary/secondary relationship with a vehicle DC/DC converter (not shown). In other embodiments, the target bus voltage value Vt, the upper dead band limit and the lower dead band limit may be set to the same value by an external module over a LIN/CAN communication bus to provide filtering of a sinusoidal noise voltage on the voltage supply bus 218, e.g., caused by an alternator.

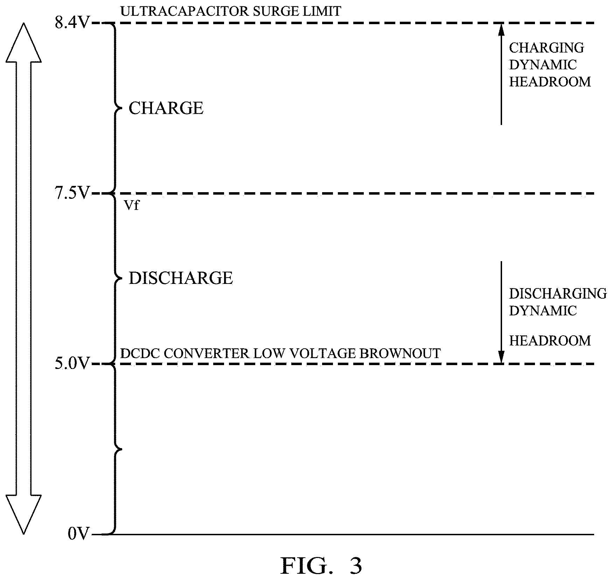

FIG. 3 shows the operating voltage range of the ultracapacitor cell stack 202 between an upper voltage limit (designated as "ULTRACAPACITOR SURGE LIMIT" in FIG. 3) and a lower voltage limit (designated as "DCDC CONVERTER LOW VOLTAGE BROWNOUT" in FIG. 3). The upper voltage limit is set to protect the ultracapacitor cell stack 202 from absorbing excess voltage from the voltage supply bus 218 that would damage the ultracapacitor cell stack 202. The lower voltage limit is set at a level below which the ultracapacitor cell stack 202 is not able to supply enough power to the DC/DC converter 208 to raise the voltage on the voltage supply bus 218. The programmable float voltage value Vf is set between the upper and lower voltage limits and can be controlled by the electronic controller 206. The float voltage value Vf can be shifted down to increase charging headroom between the float voltage value Vf and the upper voltage limit, which decreases the discharging headroom between the float voltage value Vf and the lower voltage limit. Alternatively, the float voltage value Vf can be shifted up to increase discharging headroom between the float voltage value Vf and the lower voltage limit, which decreases the charging headroom between the float voltage value Vf and the upper voltage limit. The ultracapacitor cell stack 202 is charged to absorb excess voltage on the voltage supply bus 218 and the ultracapacitor cell stack 202 is discharged to provide electrical power to raise the voltage on the voltage supply bus 218.

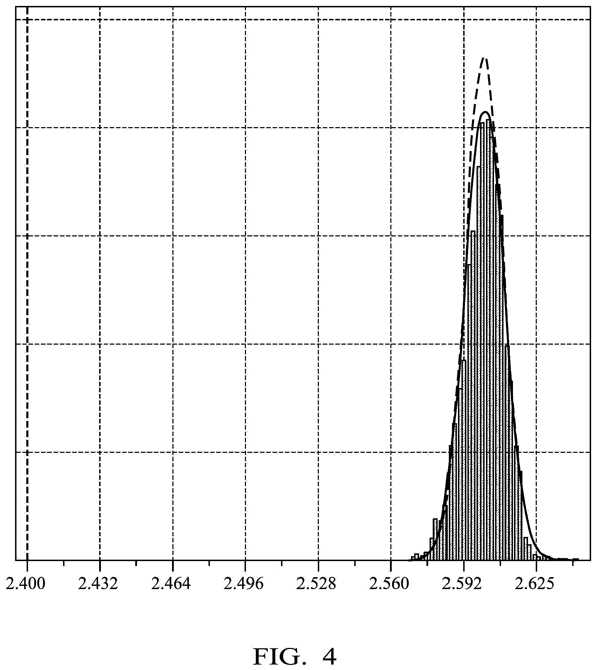

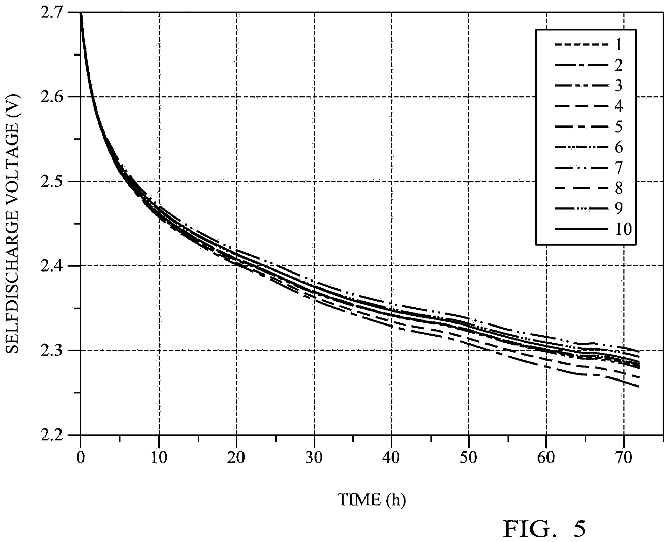

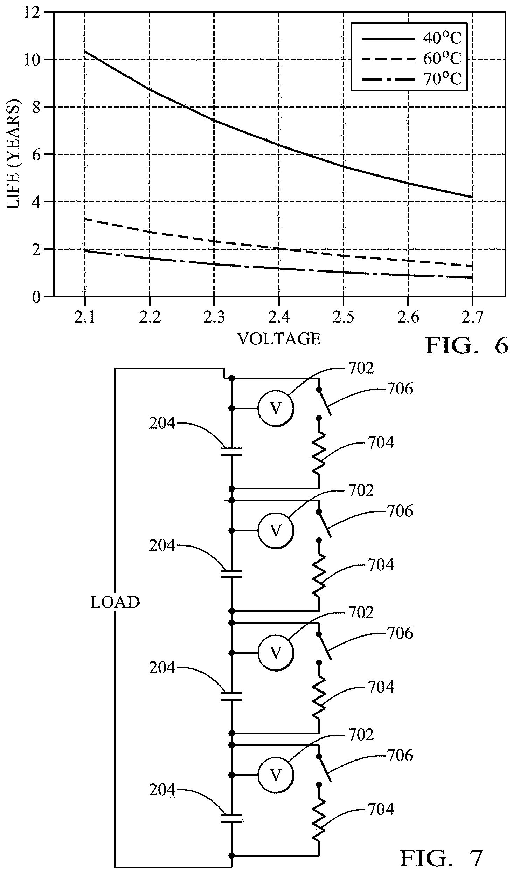

FIG. 4 shows a histogram of self-discharge in ultracapacitor cells. FIG. 5 shows a graph of ultracapacitor cell voltage divergence of ten ultracapacitor cells over 70 hours of idle time. FIG. 6 shows a graph of ultracapacitor cell life vs. terminal voltage at various temperatures.

To overcome the energy loss disadvantage of the passive balancing technique, an active discharge balancing system can be used as shown in FIG. 7. In the active discharge balancing system, the electronic controller 206 measures the relative ultracapacitor cell voltages of the ultracapacitor cells 204 using voltage sensors 702 and activates a bleed resistor 704 electrically connected in parallel with the ultracapacitor cell 204 having the highest-voltage level by turning on (closing) an electronically controlled switch 706, thereby bringing the ultracapacitor cell 204 closer to the average cell voltage of the ultracapacitor cell stack 202. In this way, all ultracapacitor cell voltages are maintained within a tight electronically-controlled band. This has the advantage of being much more energy efficient compared with passive balancing.

In addition, the active discharge balancing system is used to purposefully discharge the ultracapacitor cells 204 to a voltage threshold for the purpose of extending cell lifetime. For example, when the ultracapacitor cells 204 are idle or when the demands are low, the active discharge balancing system can purposefully discharge the ultracapacitor cells 204. According to FIG. 5, purposefully decreasing the operating voltage of cells from 2.7V to 2.2V will reduce the amount of lifetime degradation at a given ultracapacitor cell temperature by 50 percent. When the UCM 100 is returned to service, or the power demand increases, the electronic controller 206 can allow the ultracapacitor cells 204 to return to their operating voltage.

Further, the electronic controller 206 is configured to control the programmable float voltage Vf of the ultracapacitor cell stack 202. The float voltage Vf shown in FIG. 3 is the ultracapacitor cell stack's 202 actual voltage controlled by the electronic controller 206 and is between the upper voltage limit (designated as "ULTRACAPACITOR SURGE LIMIT" in FIG. 3) and the lower voltage limit (designated as "DCDC CONVERTER LOW VOLTAGE BROWNOUT" in FIG. 3). If the float voltage Vf is moved lower, the ultracapacitor cell stack 202 can charge or absorb more energy from the voltage supply bus 218 and if the float voltage Vf is moved higher, the ultracapacitor cell stack 202 can discharge or supply more energy to the voltage supply bus 218.

If the electronic controller 206 has information about the on/off status of loads connected to the voltage supply bus 218, the float voltage Vf can be raised or lowered to supply or absorb more energy to respond to disturbances on the voltage supply bus 218. For example, if all loads are ON, i.e., in an active status, then the float voltage Vf is lowered, such that the ultracapacitor cell stack 202 stores less energy, to prepare for absorbing energy from the voltage supply bus 218 in response to voltage spikes caused by loads switching OFF, i.e., to an inactive status. If all loads are OFF, such as when a vehicle is parked, the float voltage Vf is raised, such that the ultracapacitor cell stack 202 stores more energy, to allow more energy to be supplied to the voltage supply bus 218 in response to voltage sags caused by loads switching ON. If the size and the status of the loads are known, then that information may be used to set the float voltage Vf when some loads are ON, and some loads are OFF.

The other electronic controllers in the vehicle may send a load status message to the electronic controller 206 via a vehicle communication bus 236, e.g., a LIN bus or a CAN bus, to identify the total wattage of the loads that are ON and the total wattage of the loads that are OFF to set the appropriate float voltage Vf. In particular, the load status message would identify the magnitude of ON loads or the fraction of the total available loads that are ON.

In some aspects, the techniques described herein relate to an ultracapacitor module, including: an ultracapacitor cell stack containing two or more ultracapacitor cells connected in a series circuit; a bidirectional boost/buck DC/DC converter, wherein the ultracapacitor cell stack and the DC/DC converter are configured to be connected in series with a voltage supply bus of a vehicle; two or more voltage sensors configured to determine a voltage value of each of the two or more ultracapacitor cells in the series circuit; two or more electronically controlled switches each connected in series with a bleed resistor, wherein one of the electronically controlled switches and bleed resistors are connected in parallel with each of the ultracapacitor cells; and an electronic controller in electrical communication with the DC/DC converter, the voltage sensors, and the electronically controlled switches, wherein the electronic controller is configured to: determine the voltage of each of the two or more ultracapacitor cells via the voltage sensors, and operate the electronically controlled switches to selectively discharge at least one of the two or more ultracapacitor cells to bring the voltage of the discharged ultracapacitor cell closer to one of the other two or more ultracapacitor cells.

In some aspects, the techniques described herein relate to an ultracapacitor module, wherein the electronic controller is configured to: determine that the ultracapacitor cells are idle or in a low-demand state and operate the switches to intentionally discharge each of the ultracapacitor cells to a voltage threshold.

In some aspects, the techniques described herein relate to an ultracapacitor module, wherein the electronic controller is configured to set a programmable float voltage Vf of the ultracapacitor cell stack in order to optimize a first amount of energy to be supplied to the voltage supply bus and a second amount of energy to be absorbed from the voltage bus.

In some aspects, the techniques described herein relate to an ultracapacitor module, wherein the electronic controller is configured to set the programmable float voltage Vf in order to optimize an operational lifetime of the ultracapacitor cell stack.

In some aspects, the techniques described herein relate to an ultracapacitor module, wherein the ultracapacitor module further includes one or more temperature sensors configured to determine the temperature of the ultracapacitor cell stack and wherein the electronic controller is configured to set the programmable float voltage Vf and limiting current to maintain the temperature of the ultracapacitor cell stack below a temperature threshold.

In some aspects, the techniques described herein relate to an ultracapacitor module, wherein the switches are opened upon the ultracapacitor cells reaching the voltage threshold.

In some aspects, the techniques described herein relate to a method of operating an ultracapacitor module connected to a voltage supply bus of a vehicle, the ultracapacitor module having an ultracapacitor cell stack containing two or more ultracapacitor cells connected in a series circuit, a bidirectional boost/buck DC/DC converter, wherein the ultracapacitor cell stack and the DC/DC converter are configured to be connected in series with a voltage supply bus of a vehicle, two or more voltage sensors configured to determine a voltage value of each of the ultracapacitor cells, two or more electronically controlled switches each connected in series with a bleed resistor, wherein one of the electronically controlled switches and bleed resistors are connected in parallel with each of the two or more ultracapacitor cells, and an electronic controller in electrical communication with the DC/DC converter, the voltage sensors, and the electronically controlled switches, the method including: determining the voltage of each of the two or more ultracapacitor cells via the voltage sensors, and operating the switches to selectively discharge at least one of the two or more ultracapacitor cells to bring the voltage of the discharged ultracapacitor cell closer to one of the other two or more ultracapacitor cells.

In some aspects, the techniques described herein relate to a method, wherein the method further includes determining that the ultracapacitor cells are idle or in a low-demand state and operating the switches to intentionally discharge each of the ultracapacitor cells to a voltage threshold.

In some aspects, the techniques described herein relate to a method, wherein the method further includes setting the voltage threshold in order to optimize a first amount of energy lost and a second amount of energy that will be required to charge the ultracapacitor cells to full operational capability.

In some aspects, the techniques described herein relate to a method, wherein the method further includes setting a programmable float voltage Vf in order to optimize an operational lifetime of the ultracapacitor cell stack.

In some aspects, the techniques described herein relate to a method, wherein the ultracapacitor module further includes one or more temperature sensors configured to determine the temperature of the ultracapacitor cell stack and wherein the method further includes setting a programmable float voltage Vf and limiting current to maintain the temperature of the ultracapacitor cell stack below a temperature threshold.

In some aspects, the techniques described herein relate to a method, wherein the method further includes opening the switches upon the ultracapacitor cells reaching the voltage threshold.

In some aspects, the techniques described herein relate to an ultracapacitor module, including: an ultracapacitor cell stack containing one or more ultracapacitor cells; a bidirectional boost/buck DC/DC converter, wherein the ultracapacitor cell stack and the DC/DC converter are configured to be connected in series with a voltage supply bus of a vehicle; and an electronic controller in electrical communication with the DC/DC converter and a vehicle communication bus configured to provide information regarding load status information for electrical loads on the voltage supply bus, wherein the electronic controller is configured to raise or lower a programmable float voltage Vf of the ultracapacitor cell stack based on active and/or inactive load status information received from the vehicle communication bus.

In some aspects, the techniques described herein relate to an ultracapacitor module, wherein the electronic controller is configured to increase the programmable float voltage Vf when the load status information indicates an increased current on the voltage supply bus and wherein the electronic controller is configured to decrease the programmable float voltage Vf when the load status information indicates a decreased current on the voltage supply bus.

In some aspects, the techniques described herein relate to an ultracapacitor module, wherein the electronic controller is configured to decrease the programmable float voltage Vf when the load status information indicates an increased number of electrical loads active on the voltage supply bus.

In some aspects, the techniques described herein relate to an ultracapacitor module, wherein the electronic controller is configured to increase the programmable float voltage Vf when the load status information indicates an increased number of electrical loads inactive on the voltage supply bus.

In some aspects, the techniques described herein relate to an ultracapacitor module, wherein the electronic controller is configured to increase the programmable float voltage Vf when the load status information indicates an increase in electrical power supplied by the voltage supply bus.

In some aspects, the techniques described herein relate to an ultracapacitor module, wherein the electronic controller is configured to decrease the programmable float voltage Vf when the load status information indicates a decrease in electrical power supplied by the voltage supply bus.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. An ultracapacitor module (100), comprising:
an ultracapacitor cell stack (202) containing two or more ultracapacitor cells (204) connected in a series circuit;
a bidirectional boost/buck DC/DC converter (208), wherein the ultracapacitor cell stack (202) and the DC/DC converter (208) are configured to be connected in series with a voltage supply bus (218) of a vehicle;
two or more voltage sensors (702) configured to determine a voltage value of each of the two or more ultracapacitor cells (204) in the series circuit;
two or more electronically controlled switches (706) each connected in series with a bleed resistor (704), wherein one of the electronically controlled switches (706) and bleed resistor (704) are connected in parallel with each of the ultracapacitor cells (204); and
an electronic controller (206) in electrical communication with the DC/DC converter (208), the voltage sensors (702), and the electronically controlled switches (706), wherein the electronic controller (206) is configured to:
determine the voltage of each of the two or more ultracapacitor cells (204) via the voltage sensors (702), and
operate the electronically controlled switches (706) to selectively discharge at least one of the two or more ultracapacitor cells (204) to bring the voltage of the discharged ultracapacitor cell closer to one of the other two or more ultracapacitor cells (204).

2. The ultracapacitor module (100) according to claim 1, wherein the electronic controller (206) is configured to:
determine that the ultracapacitor cells (204) are idle or in a low-demand state, and
operate the switches (706) to intentionally discharge each of the ultracapacitor cells (204) to a voltage threshold.

3. The ultracapacitor module (100) according to claim 2, wherein the electronic controller (206) is configured to set a programmable float voltage Vf of the ultracapacitor cell stack (202) in order to optimize a first amount of energy to be supplied to the voltage supply bus (218) and a second amount of energy to be absorbed from the voltage bus.

4. The ultracapacitor module (100) according to claim 3, wherein the electronic controller (206) is configured to set the programmable float voltage Vf in order to optimize an operational lifetime of the ultracapacitor cell stack (202).

5. The ultracapacitor module (100) according to claim 3 or 4, wherein the ultracapacitor module (100) further comprises one or more temperature sensors (230) configured to determine the temperature of the ultracapacitor cell stack (202) and wherein the electronic controller (206) is configured to set the programmable float voltage Vf and limiting current to maintain the temperature of the ultracapacitor cell stack (202) below a temperature threshold.

6. The ultracapacitor module (100) according to any one of claims 2 to 5, wherein the switches (706) are opened upon the ultracapacitor cells (204) reaching the voltage threshold.

7. A method of operating an ultracapacitor module (100) connected to a voltage supply bus (218) of a vehicle, the ultracapacitor module (100) having an ultracapacitor cell stack (202) containing two or more ultracapacitor cells (204) connected in a series circuit, a bidirectional boost/buck DC/DC converter (208), wherein the ultracapacitor cell stack (202) and the DC/DC converter (208) are configured to be connected in series with a voltage supply bus (218) of a vehicle, two or more voltage sensors (702) configured to determine a voltage value of each of the ultracapacitor cells (204), two or more electronically controlled switches (706) each connected in series with a bleed resistor (704), wherein one of the electronically controlled switches (706) and bleed resistor (704) are connected in parallel with each of the two or more ultracapacitor cells (204), and an electronic controller (206) in electrical communication with the DC/DC converter (208), the voltage sensors (702), and the electronically controlled switches (706), the method comprising:
determining the voltage of each of the two or more ultracapacitor cells (204) via the voltage sensors (702), and
operating the switches (706) to selectively discharge at least one of the two or more ultracapacitor cells (204) to bring the voltage of the discharged ultracapacitor cell closer to one of the other two or more ultracapacitor cells (204).

8. The method in accordance with claim 7, wherein the method further comprises:
determining that the ultracapacitor cells (204) are idle or in a low-demand state, and
operating the switches (706) to intentionally discharge each of the ultracapacitor cells (204) to a voltage threshold.

9. The method in accordance with claim 8, wherein the method further comprises setting the voltage threshold in order to optimize a first amount of energy lost and a second amount of energy that will be required to charge the ultracapacitor cells (204) to full operational capability.

10. The method in accordance with claim 8 or 9, wherein the method further comprises setting a programmable float voltage Vf in order to optimize an operational lifetime of the ultracapacitor cell stack (202).

11. The method in accordance with any one of claims 8 to 10, wherein the ultracapacitor module (100) further comprises one or more temperature sensors (230) configured to determine the temperature of the ultracapacitor cell stack (202) and wherein the method further comprises setting a programmable float voltage Vf and limiting current to maintain the temperature of the ultracapacitor cell stack (202) below a temperature threshold.

12. The method in accordance with any one of claims 8 to 11, wherein the method further comprises opening the switches (706) upon the ultracapacitor cells (204) reaching the voltage threshold.

13. An ultracapacitor module (100), comprising:
an ultracapacitor cell stack (202) containing one or more ultracapacitor cells (204);
a bidirectional boost/buck DC/DC converter (208), wherein the ultracapacitor cell stack (202) and the DC/DC converter (208) are configured to be connected in series with a voltage supply bus (218) of a vehicle; and
an electronic controller (206) in electrical communication with the DC/DC converter (208) and a vehicle communication bus (236) configured to provide information regarding load status information for electrical loads on the voltage supply bus (218), wherein the electronic controller (206) is configured to raise or lower a programmable float voltage Vf of the ultracapacitor cell stack (202) based on active and/or inactive load status information received from the vehicle communication bus (236).

14. The ultracapacitor module (100) according to claim 13, wherein the electronic controller (206) is configured to increase the programmable float voltage Vf when the load status information indicates an increased current on the voltage supply bus (218) and wherein the electronic controller (206) is configured to decrease the programmable float voltage Vf when the load status information indicates a decreased current on the voltage supply bus (218).

15. The ultracapacitor module (100) according to claim 13 or 14, wherein the electronic controller (206) is configured to decrease the programmable float voltage Vf when the load status information indicates an increased number of electrical loads active on the voltage supply bus (218).
